# DEMANDE DE BREVET EUROPEEN

(11) **EP 4 755 940 A1**
(43) Date de publication de la demande: **10.06.2026**
(21) Numéro de dépôt: 25220020.9
(22) Date de dépôt: 02.12.2025
(51) Int. Cl.: C08G 18/44, C08G 64/04, C08G 64/16

(54) **POLYCARBONATES A BASE DE DIOL DE TYPE DIVANILLINE, LEURS PROCEDES DE PREPARATION, ET LEURS UTILISATIONS**

(30) Priorité: 03.12.2024 FR 2413358
(71) Demandeur: Commissariat à l'Energie Atomique et aux Energies Alternatives, 75015 Paris (FR)
(72) Inventeur: POLONI, Mélissa, 38054 Grenoble cedex 09 (FR); AKPO, Emma, 38054 Grenoble cedex 09 (FR); ROLERE, Sébastien, 38054 Grenoble cedex 09 (FR)
(74) Mandataire: Gevers & Orès

(57) **Abrégé**

La présente invention concerne des composés oligomères de polycarbonate et polycarbonates comprenant des unités dérivées d'un diol divanilline ou dérivés de divanilline (pouvant être biosourcé). La présente invention concerne également leurs procédés de préparation, notamment en voie fondue, et leurs utilisations.

## Description

La présente invention concerne des composés oligomères de polycarbonate et polycarbonates comprenant des unités dérivées d'un diol divanilline ou dérivés de divanilline (pouvant être biosourcé). La présente invention concerne également leurs procédés de préparation, notamment en voie fondue, et leurs utilisations.

Les polycarbonates de bisphénol A (BPA) sont des polymères thermoplastiques largement utilisés dans diverses applications industrielles et commerciales en raison de leurs propriétés exceptionnelles. Ces matériaux sont particulièrement appréciés pour leur transparence, leur rigidité, leur résistance aux chocs et leur stabilité thermique. Ils sont couramment utilisés dans la fabrication de produits tels que les CD, les lunettes de sécurité, les équipements médicaux et les contenants alimentaires.

L'un des principaux avantages des polycarbonates de BPA est leur robustesse. Ils offrent une résistance mécanique élevée, ce qui les rend idéaux pour des applications nécessitant durabilité et longévité. De plus, leur transparence et leur capacité à être facilement moulés en formes complexes en font un choix privilégié pour les produits nécessitant à la fois esthétique et fonctionnalité. Leur stabilité thermique permet également une utilisation dans des environnements à haute température sans déformation ni dégradation significative.

Cependant, les polycarbonates de BPA présentent également des inconvénients notables. L'un des principaux problèmes est la libération potentielle de BPA, un perturbateur endocrinien, dans les aliments et les boissons lorsqu'ils sont utilisés dans des contenants alimentaires. Cette migration de BPA peut poser des risques pour la santé humaine, notamment des effets sur le système hormonal. En réponse à ces préoccupations, de nombreux pays ont mis en place des réglementations strictes limitant l'utilisation de BPA dans les produits destinés aux enfants et aux nourrissons.

Il existe plusieurs alternatives au bisphénol A (BPA) qui sont explorées et utilisées pour réduire les risques associés à ce composé. Voici quelques-unes des principales alternatives : le Bisphénol S (BPS), utilisé dans certains produits comme les papiers thermiques, est une alternative directe au BPA. Cependant, des études montrent qu'il pourrait également avoir des effets perturbateurs endocriniens similaires. Le Bisphénol F (BPF), autre alternative directe utilisé dans les résines époxy et les polycarbonates, présente des propriétés chimiques similaires au BPA et des préoccupations similaires concernant la santé.

Dans le contexte d'autres alternative au BPA, l'isosorbide a été utilisé comme monomère pour produire des polycarbonates sans BPA. Ces polycarbonates à base d'isosorbide présentent plusieurs avantages. Contrairement au BPA, l'isosorbide ne présente pas de risque de perturbation endocrinienne. Les polycarbonates à base d'isosorbide offrent en outre une bonne résistance mécanique et thermique. Certains dérivés de l'isosorbide sont également biodégradables, ce qui les rend plus respectueux de l'environnement.

Cependant, l'isosorbide est principalement produit à partir de ressources renouvelables comme l'amidon. Et cette production peut donc entrer en concurrence avec l'alimentation, car l'amidon utilisé pour fabriquer l'isosorbide provient souvent de cultures alimentaires comme le maïs, et cela peut entraîner une compétition pour les terres agricoles entre les cultures destinées à l'alimentation et celles destinées à la production industrielle, et donc peut potentiellement augmenter les prix des denrées alimentaires, affectant ainsi la disponibilité et l'accessibilité des aliments pour les populations.

D'autres diols ont été testés, mais ils sont également en concurrence avec l'alimentation et/ou conduisent à des composés finaux peu résistants thermiquement, notamment lorsque les diols ne sont pas cycliques, en particulier non aromatiques.

Un objectif de l'invention est ainsi de fournir des polycarbonates maintenant les propriétés avantageuses de ces composés, sans utiliser les réactifs indésirables précités comme le BPA et le phosgène.

Un autre objectif de l'invention est de fournir des polycarbonates à base de diols biosourcés, sans que les réactifs utilisés soient en concurrence avec l'alimentation.

Par « biosourcé », on entend notamment issu de matière organique renouvelable, d'origine microbienne, végétale, fongique ou animale, en particulier végétale.

Un autre objectif de l'invention est de fournir de tels polycarbonates à l'aide d'un procédé attrayant du point de vue environnemental qu'économique. Environnemental, en éliminant l'utilisation de composés hautement toxiques, comme par exemple le phosgène. Economique, en réduisant le nombre d'étapes de traitements chimiques et de purification.

Ainsi, l'invention concerne un oligomère de polycarbonate comprenant des unités structurales dérivées d'un diol divanilline ou dérivé de divanilline.

Par oligomère de polycarbonate, on entend notamment un composé comprenant de 2 à 40 unités structurales dérivées d'un diol divanilline ou dérivé de divanilline, en particulier de 2 à 20 unités structurales dérivées d'un diol divanilline ou dérivé de divanilline, par exemple de 2 à 13 unités structurales dérivées d'un diol divanilline ou dérivé de divanilline.

Selon un mode de réalisation particulier, le diol dérivé de divanilline est de formule (I) suivante : 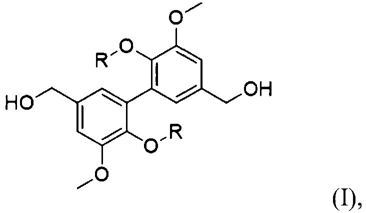 dans laquelle R est choisi parmi les alkyles linéaires et ramifiés en C₁ à C₆, R étant en particulier Me.

Selon un autre mode de réalisation particulier, le diol divanilline est de formule (II) suivante :

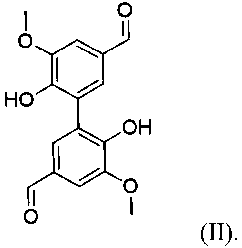

Selon un mode de réalisation particulier, l'oligomère tel que défini précédemment comprend en sus une ou deux unités structurales terminales dérivées d'un carbonate organique, en particulier symétrique ou mixte.

Selon un mode de réalisation particulier, le carbonate organique est de formule suivante : 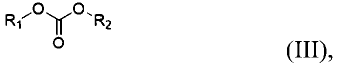 dans laquelle R₁ et R₂ sont indépendamment choisis parmi les alkyles linéaires et ramifiés en C₁ à C₆, en particulier Me ou Et, et les aryles, en particulier Ph, R₁ et R₂ étant plus particulièrement identiques.

Selon un mode de réalisation particulier, l'oligomère tel que défini précédemment est de formule (I₀) suivante : 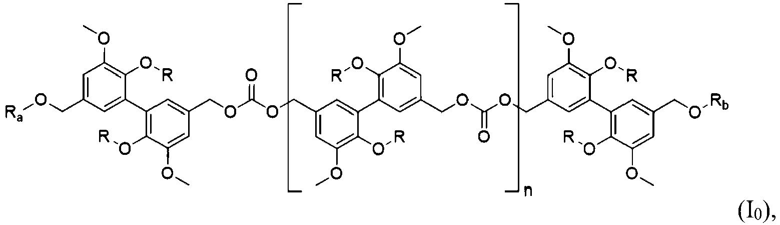 dans laquelle :
n est un entier compris entre 0 et 15 ou 20, n étant notamment un entier compris entre 1 et 15 ou 20, n étant en particulier un entier compris entre 2 et 15 ou 20 ;
R est choisi parmi les alkyles linéaires et ramifiés en C₁ à C₆, R étant en particulier Me ;
Rₐ est choisi parmi H, et les groupes COOR_{c}, où Rₑ est choisi parmi les alkyles linéaires et ramifiés en C₁ à C₆, en particulier Me ou Et, et les aryles, en particulier Ph ;
R₃ est choisi parmi H, et les groupes COOR_{d}, où R_{d} est choisi parmi les alkyles linéaires et ramifiés en C₁ à C₆, en particulier Me ou Et, et les aryles, en particulier Ph.

Selon un mode de réalisation particulier, l'oligomère tel que défini précédemment est de formule (I₁) suivante : 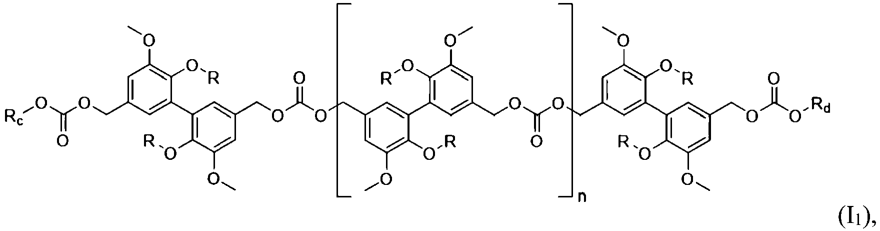 dans laquelle :
n est un entier compris entre 0 et 15 ou 20, n étant notamment un entier compris entre 1 et 15 ou 20, n étant en particulier un entier compris entre 2 et 15 ou 20 ;
R_{c} et Rd sont indépendamment choisis parmi les alkyles linéaires et ramifiés en C₁ à C₆, en particulier Me ou Et, et les aryles, en particulier Ph.

Selon un mode de réalisation particulier, l'oligomère tel que défini précédemment est de formule (II₀) suivante : 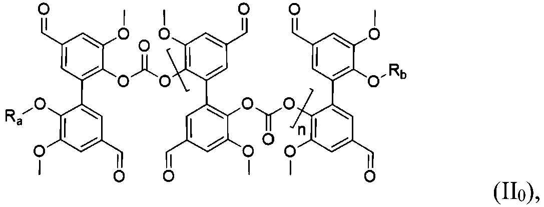 dans laquelle :
n est un entier compris entre 0 et 15 ou 20, n étant en particulier un entier compris entre 1 et 15 ou 20, n étant par exemple un entier compris entre 2 et 15 ou 20 ;
R est choisi parmi les alkyles linéaires et ramifiés en C₁ à C₆, R étant en particulier Me ;
Rₐ est choisi parmi H, et les groupes COOR_{c}, où R_{c} est choisi parmi les alkyles linéaires et ramifiés en C₁ à C₆, en particulier Me ou Et, et les aryles, en particulier Ph ;
R_{b} est choisi parmi H, et les groupes COOR_{d}, où R_{d} est choisi parmi les alkyles linéaires et ramifiés en C₁ à C₆, en particulier Me ou Et, et les aryles, en particulier Ph.

Selon un mode de réalisation particulier, l'oligomère tel que défini précédemment est de formule (II₁) suivante : 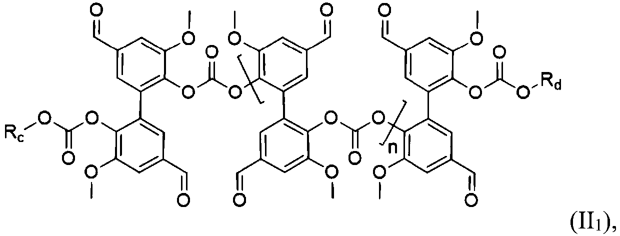 dans laquelle :
n est un entier compris entre 0 et 15 ou 20, n étant en particulier un entier compris entre 1 et 15 ou 20, n étant par exemple un entier compris entre 2 et 15 ou 20 ;
R_{c} et Rd sont indépendamment choisis parmi les alkyles linéaires et ramifiés en C₁ à C₆, en particulier Me ou Et, et les aryles, en particulier Ph.

Tous les modes de réalisation qui suivent concerne tout oligomère tel que défini précédemment, par exemple un oligomère de formule (I₀), (I₁) ou (I₂) tel que défini précédemment.

Selon un mode de réalisation particulier, n est un entier compris entre 1 et 10.

Selon un mode de réalisation particulier, n est un entier compris entre 2 et 10.

Selon un mode de réalisation particulier, l'oligomère tel que défini précédemment comprend en sus au moins une unité structurale dérivée d'un autre diol, notamment aliphatique ou aromatique, et/ou cyclique ou linéaire, par exemple choisi parmi cyclohexanediméthanol (CHDM), éthylène glycol, propylène glycol, et isosorbide.

Selon un autre aspect, l'invention concerne également l'utilisation d'un diol divanilline ou dérivé de divanilline pour l'obtention d'un oligomère de polycarbonate comprenant des unités structurales dérivées dudit diol.

Tous les modes de réalisation définis précédemment relativement à l'oligomère s'appliquent également ici, seuls ou en combinaison.

Selon un autre aspect, l'invention concerne également un procédé de préparation d'un oligomère de polycarbonate tel que défini précédemment, comprenant une étape de polymérisation d'un diol divanilline ou dérivé de divanilline en présence d'un carbonate organique.

Tous les modes de réalisation définis précédemment relativement à l'oligomère s'appliquent également ici, seuls ou en combinaison.

Selon un mode de réalisation particulier, l'étape de polymérisation se fait en voie fondu, le diol étant en particulier un diol dérivé de divanilline.

Selon un mode de réalisation particulier, l'étape de polymérisation se fait en présence d'un catalyseur, notamment choisi parmi les liquides ioniques, notamment un 1-éthyl-3-méthylimidazolium, les bases fortes, notamment KOH et NaOH, les carbonates inorganiques, notamment CsCO₃ et Na₂CO₃, les acides de Lewis, notamment acétate de zinc ou Ti(iOPr)₄, des bases organiques, notamment la 4-diméthylaminopyridine (DMAP) et le 1,8-diazabicyclo[5.4.0]undéc-7-ène DBU), le catalyseur étant par exemple le 1-éthyl-3-méthylimidazolium acétate.

Selon un mode de réalisation particulier, l'étape de polymérisation se fait sous atmosphère inerte, par exemple sous argon.

Selon un mode de réalisation particulier, l'étape de polymérisation comprend une sous-étape (i) de transestérification, et une sous-étape (ii) de polycondensation,
la sous-étape (i) de transestérification se faisant notamment à une température comprise de 100 à 250°C, par exemple à environ 200°C, et/ou sous une pression comprise de 800 à 1000 mbar, par exemple sous pression atmosphérique, et/ou pendant 1 à 48 heures, par exemple pendant 15 heures environ ;
la sous-étape (ii) de polycondensation se faisant notamment à une température comprise de 150 à 300°C, par exemple à environ 240°C, et/ou sous une pression comprise de 1 à 1000 mbar, par exemple à environ 2 mbar, et/ou pendant 0,5 à 10 heures, par exemple pendant 1 heure environ.

Selon un mode de réalisation particulier, lors de la sous-étape (i), le phénol sous-produit est retiré du mélange réactionnel, en particulier par distillation.

Selon un mode de réalisation particulier, l'étape de polymérisation comprend une étape (o) de mise en contact du diol et du carbonate organique, en particulier en excès, en présence d'une base, par exemple le carbonate de potassium. Cette étape (o) se fait par exemple à une température comprise de 40 à 100°C, par exemple à environ 60°C, et/ou sous une pression comprise de 800 à 1000 mbar, par exemple sous pression atmosphérique, et/ou pendant 2 à 24 heures, par exemple pendant 12 heures environ. Le ou les composés intermédiaires formés sont alors en particulier isolés, par filtration et/ou distillation.

Selon un mode de réalisation particulier, l'étape de polymérisation comprend, après l'étape (o), une sous-étape (i) de transestérification, et une sous-étape (ii) de polycondensation,
la sous-étape (i) de transestérification se faisant notamment à une température comprise de 100 à 250°C, par exemple à environ 200°C, et/ou sous une pression comprise de 800 à 1000 mbar, par exemple sous pression atmosphérique, et/ou pendant 1 à 48 heures, par exemple pendant 15 heures environ ;
la sous-étape (ii) de polycondensation se faisant notamment à une température comprise de 150 à 300°C, par exemple à environ 240°C, et/ou sous une pression comprise de 1 à 1000 mbar, par exemple à environ 2 mbar, et/ou pendant 0,5 à 10 heures, par exemple pendant 1 heure environ.

Selon un mode de réalisation particulier, l'oligomère de polycarbonate comprend deux unités structurales terminales dérivées dudit carbonate organique, ledit carbonate organique étant en particulier au départ de la réaction de polymérisation présent à un excès de 20 par rapport au diol.

Selon un mode de réalisation particulier, l'oligomère de polycarbonate comprend une seule unité structurale terminale dérivée dudit carbonate organique.

Selon un mode de réalisation particulier, l'oligomère de polycarbonate ne comprend pas d'unité structurale terminale dérivée dudit carbonate organique.

Selon un mode de réalisation particulier, l'oligomère de polycarbonate est de formule (I₀), notamment (I₁), le diol est de formule (I) et le carbonate organique est de formule (III), telles que définies précédemment, l'intermédiaire de formule (I₂) suivante étant en particulier formé, plus particulièrement lors de la sous-étape (i) telle que définie précédemment : 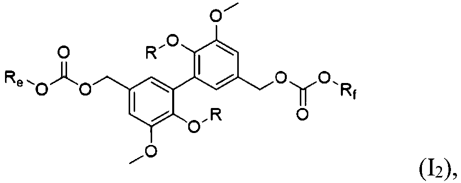 dans laquelle :
R est tel que défini précédemment,
Rₑ et R_{f} sont indépendamment R₁ ou R₂ tels que définis précédemment.

Selon un mode de réalisation particulier, l'oligomère de polycarbonate est de formule (II₀), notamment (II₁), le diol est de formule (I) et le carbonate organique est de formule (III), telles que définies précédemment, l'intermédiaire de formule (I₃) suivante étant en particulier formé, plus particulièrement lors de la sous-étape (i) telle que définie précédemment : 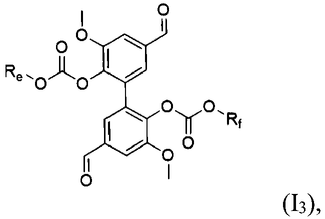 dans laquelle :
R est tel que défini précédemment,
Rₑ et R_{f} sont indépendamment R₁ ou R₂ tels que définis précédemment.

Selon un mode de réalisation particulier, le diol de formule (I) est obtenu selon un procédé comprenant les étapes suivantes :
a) Une étape de dimérisation de la vanilline par oxydo-réduction, en particulier en présence d'un oxydant, par exemple Na₂S₂O₈, FeSO₄, notamment en présence d'un catalyseur des réactions d'oxydoréduction, par exemple la peroxydase de Raifort ;
b) Une étape d'éthérification des OH du dimère obtenu à l'étape précédente, en particulier par action d'une base, par exemple K₂CO₃, puis d'un composé R-X, où R est tel que défini précédemment, et X est un groupe partant, R-X étant en particulier R-I ;
c) Une étape de réduction des fonctions aldéhydes du composé obtenu à l'étape précédente en alcools, en présence d'un réducteur, par exemple NaBH₄.

Selon un mode de réalisation particulier, l'étape de polymérisation se fait en voie solvant, le diol étant en particulier un diol divanilline.

Par « voie solvant », on entend notamment qu'un mélange réactionnel, comprenant notamment au moins un composé de formule (I₃) et éventuellement le diol divanilline, est dissous ou suspendu dans au moins un solvant organique, notamment à haut point d'ébullition (par exemple ayant une température d'ébullition supérieure à 150°C à pression atmosphérique), puis chauffé, par exemple à reflux, éventuellement en présence d'un catalyseur, par exemple tel que défini précédemment.

Selon un autre aspect, l'invention concerne également l'utilisation d'un oligomère tel que défini précédemment, comprenant notamment de 2 à 40 unités structurales dérivées d'un diol divanilline ou dérivé de divanilline, pour la préparation d'oligomères comprenant un nombre plus élevé d'unités structurales dérivées d'un diol divanilline ou dérivé de divanilline, ou de polycarbonates.

Tous les modes de réalisation définis précédemment relativement à l'oligomère s'appliquent également ici, seuls ou en combinaison.

Par « polycarbonates », on entend notamment un composé comprenant plus de 40 unités structurales dérivées d'un diol divanilline ou dérivé de divanilline.

Cette préparation peut se faire selon l'une ou plusieurs des étapes présentées précédemment.

Lesdits polycarbonates présentent de plus hautes masses molaires, et ainsi une haute température de transition vitreuse. Ces polycarbonates peuvent par exemple trouver dans les domaines de l'automobile (phare de voiture), du médical (les seringues), et de l'optique (lunettes).

Selon un autre aspect, l'invention concerne également un polycarbonate, tel que défini précédemment.

Tous les modes de réalisation définis précédemment relativement à l'oligomère s'appliquent également ici, seuls ou en combinaison.

Selon un autre aspect, l'invention concerne également l'utilisation d'un oligomère tel que défini précédemment, lequel est terminé par des fins de chaîne OH, en tant que précurseurs pour la synthèse de polyuréthanes.

Tous les modes de réalisation définis précédemment relativement à l'oligomère s'appliquent également ici, seuls ou en combinaison.

Ces polyuréthanes sont à caractère rigide.

Par « des fins de chaîne OH », on entend par exemple des composés de formule (I₀) ou (II₀) dans lesquelles Rₐ et R_{b} sont H.

Selon un autre aspect, l'invention concerne également un polyuréthane, tel que défini précédemment.

Tous les modes de réalisation définis précédemment relativement à l'oligomère s'appliquent également ici, seuls ou en combinaison.

### DEFINITIONS

Tel qu'on l'entend ici, les plages de valeur sous forme de « x-y » ou « de x à y » ou « entre x et y » incluent les bornes x et y, les entiers compris entre ces bornes, ainsi que tous les autres nombres réels compris entre ces bornes. A titre d'exemple, « 1-5 », ou « de 1 à 5 » ou « entre 1 et 5 » désignent les entiers 1, 2, 3, 4 et 5, ainsi que tous les autres nombres réels compris entre 1 et 5. Les modes de réalisations préférés incluent chaque entier pris individuellement dans la plage de valeur, ainsi que toute sous-combinaison de ces entiers et tout ensemble de nombres réels compris entre ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'on l'utilise dans la présente description, le terme « environ » se réfère à un intervalle de valeurs de ± 10 % d'une valeur spécifique. A titre d'exemple, l'expression « environ 20 » comprend les valeurs de 20 ± 10 %, soit les valeurs de 18 à 22.

### FIGURES

La **figure 1** présente les montages utilisés pour la synthèse polycarbonate a) la phase de transestérification b) la phase de polycondensation, selon l'exemple 2.
La **figure 2** montre un thermogramme des oligomères polycarbonates obtenus (He, 10 K.min⁻¹) : première montée (haut) et deuxième montée (bas).
La **figure 3** est une superposition de spectres RMN du proton des intermédiaires de synthèse et du tétraméthoxy divanillyle diol tel qu'obtenu dans l'exemple 1.
La **figure 4** est un spectre ¹H-RMN du composé tel qu'obtenu dans l'exemple 2.
La **figures 5** présente des spectres ¹³C-RMN (haut) et DEPT (bas) du composé tel qu'obtenu dans l'exemple 2.
La **figure 6** est un spectre ¹H-RMN du composé tel qu'obtenu dans l'exemple 3.
La **figure 7** présente un spectre ¹³C-RMN du composé tel qu'obtenu dans l'exemple 3.
La **figure 8** est un spectre ¹H-RMN du composé tel qu'obtenu dans l'exemple 4.
La **figure 9** présente un spectre ¹³C-RMN du composé tel qu'obtenu dans l'exemple 4.
La **figure 10** est un spectre ¹H-RMN du composé tel qu'obtenu dans l'exemple 5.

### EXEMPLES

### Exemple 1 : Synthèse d'un diol dérivé de divanilline

Le tétraméthoxy divanillyle diol a été synthétisé en trois étapes comme présenté ci-dessous:
- La dimérisation de la vanilline par oxydo-réduction
- La protection des hydroxyles par éthérification
- La réduction des fonctions aldéhydes en alcool

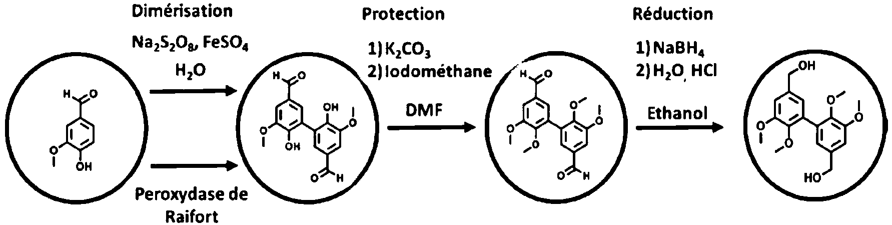

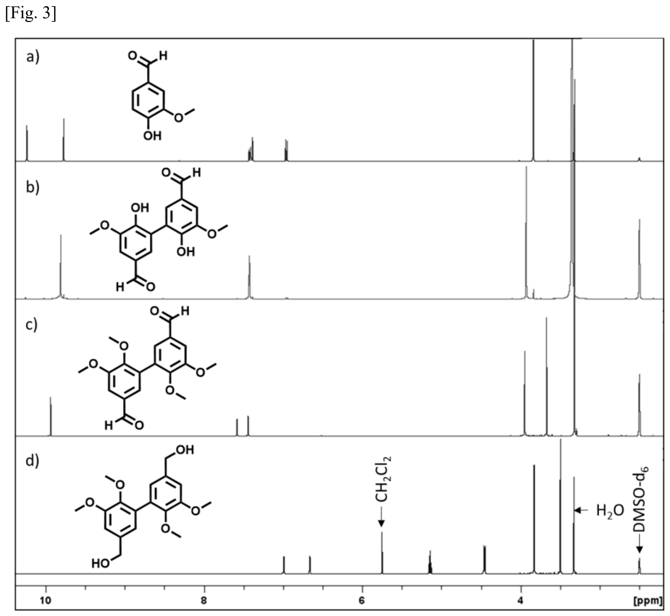

La structure de la molécule finale et des intermédiaires de synthèse ont été vérifiées par RMN du proton (**figure 3**).

### Exemple 2 : Polymérisation du tétraméthoxy divanillyle diol en présence de carbonate de diphényle

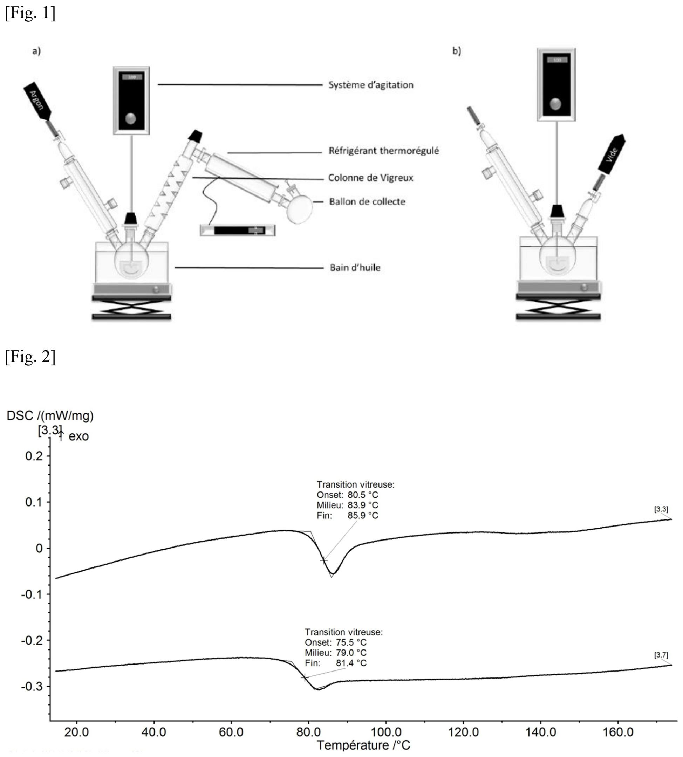

2.24 g (10.48 mmol) de carbonate de diphényle et 3.5 g (10.48 mmol) de tétraméthoxy divanillyle diol sont introduits dans un ballon tricol. Puis 1 mL d'une solution de 1-ethyl-3-méthylimidazolium acetate (3.1 mmol/L dans du toluène) est ajouté comme catalyseur au mélange réactionnel. Le milieu est inerté sous azote puis la première phase de transestérification est réalisée à 240 °C et à pression atmosphérique, pendant 15h. Tout au long de cette étape, le phénol sous-produit est distillé par une colonne de Vigreux, maintenu à l'état liquide grâce à un tube chauffé à 60 °C, puis récupéré dans un ballon de collecte. Dans un second temps appelé polycondensation, la colonne de Vigreux est retirée et la pression abaissée à 2 mbar pendant durant 4 heures à 240°C. Les montages utilisés lors de la synthèse apparaissent en **figure 1****.**

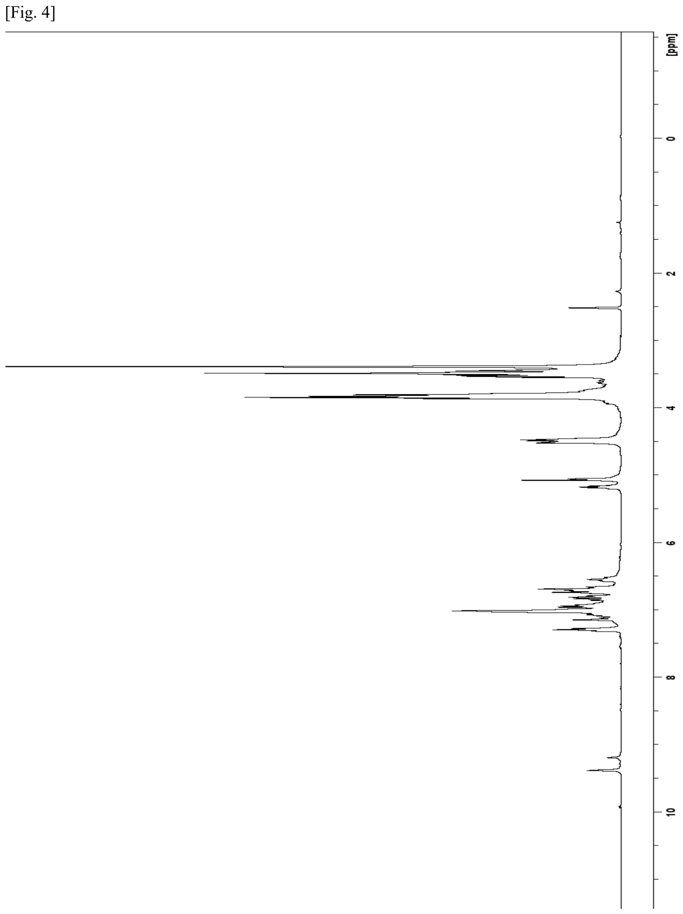

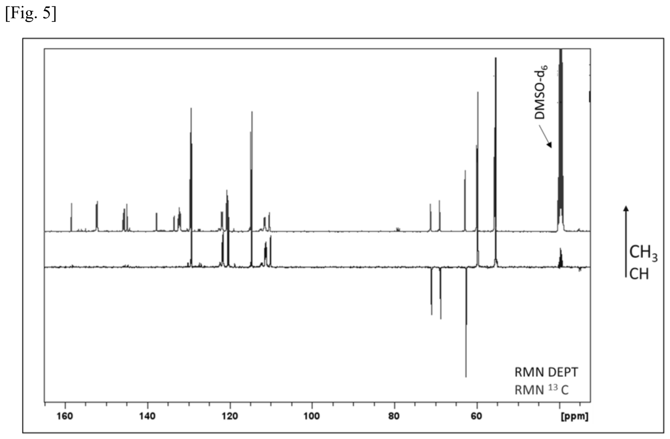

Il est alors possible d'obtenir des oligomères de polycarbonate synthétisés à partir de tétraméthoxy divanillyle diol et de diphényl carbonate. Le produit de synthèse est analysé par ¹H-RMN (**figure 4**), ¹³C-RMN (**figure 5**), DEPT (**figure 5**).

Ces oligomères peuvent par la suite être utilisés pour la synthèse de polycarbonates de plus haute masse molaire.

Il s'agit par exemple d'introduire les oligomères de polycarbonate tels que définis précédemment avec de nouvelles sources de carbonates (par exemple diphényle/diméthyle/diéthyle carbonate) et/ou d'autres diols, puis réaliser à nouveau les étapes de transestérification (en se plaçant par exemple au-dessus de la température de fusion et d'ébullition du sous-produit, avec un montage permettant la distillation) et de polycondensation (en augmentant par exemple la température et en se plaçant sous vide).

### Exemple 3 : Polymérisation du tétraméthoxy divanillyle diol en présence de carbonate de diméthyle

4g de tétraméthoxy divanillyle (11.98 mmol) ainsi qu'un gros excès de carbonate de dimethyle (21.6g ; 239.5 mmol) et de carbonate de potassium (4.96g ; 35.94 mmol) sont laissé à 60°C pendant toute une nuit sous agitation. Par la suite, le mélange d'oligomères, de méthanol, de carbonate de diméthyle et de carbonate de potassium en excès est filtré afin d'éliminer K₂CO₃. Enfin la solution est distillée à 120°C afin de ne récupérer que les oligomères de tétraméthoxy divanillyle diol, majoritairement terminés par des carbonates de méthyle.

Une fois cette étape préliminaire réalisée, les oligomères de tétraméthoxy divanillyle sont mis en présence de 1 mL d'une solution de 1-ethyl-3-méthylimidazolium acetate (3.1 mmol/L dans du toluène), puis le milieu est inerté sous azote afin d'initier la première phase de transestérification (1h à 180°C, 1h à 190°C, 1h à 200°C, 1h à 210°C, pression atmosphérique). Tout au long de cette étape, le carbonate de diméthyle en excès ainsi que le méthanol sous-produit sont distillés par une colonne de Vigreux, et récupérés dans un ballon de collecte. Dans un second temps appelé polycondensation, la colonne de Vigreux est retirée et la pression abaissée à 2 mbar pendant durant 1 heure à 220°C. Les montages utilisés lors de la synthèse apparaissent en figure 2.

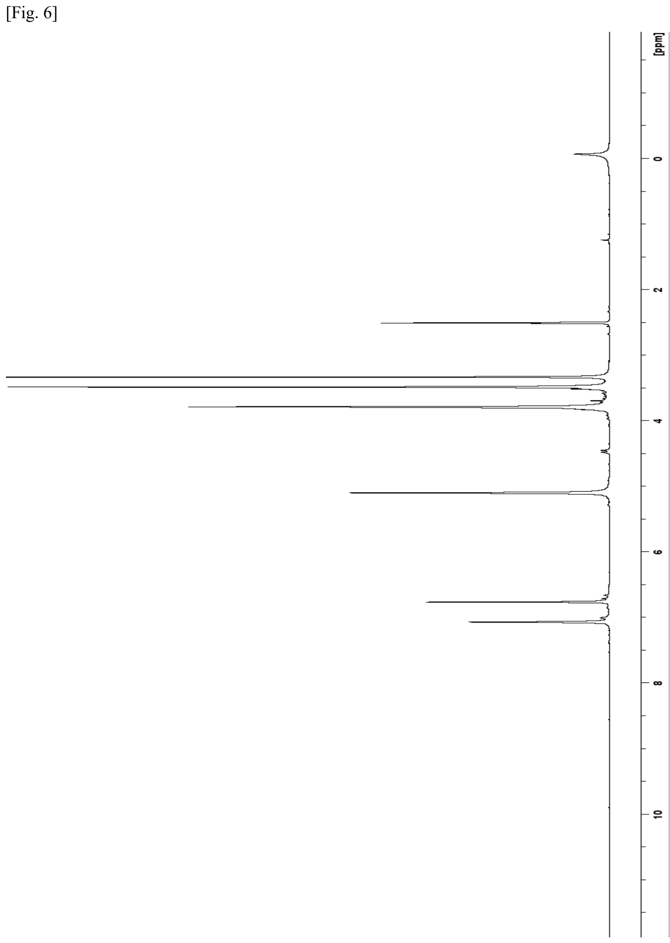

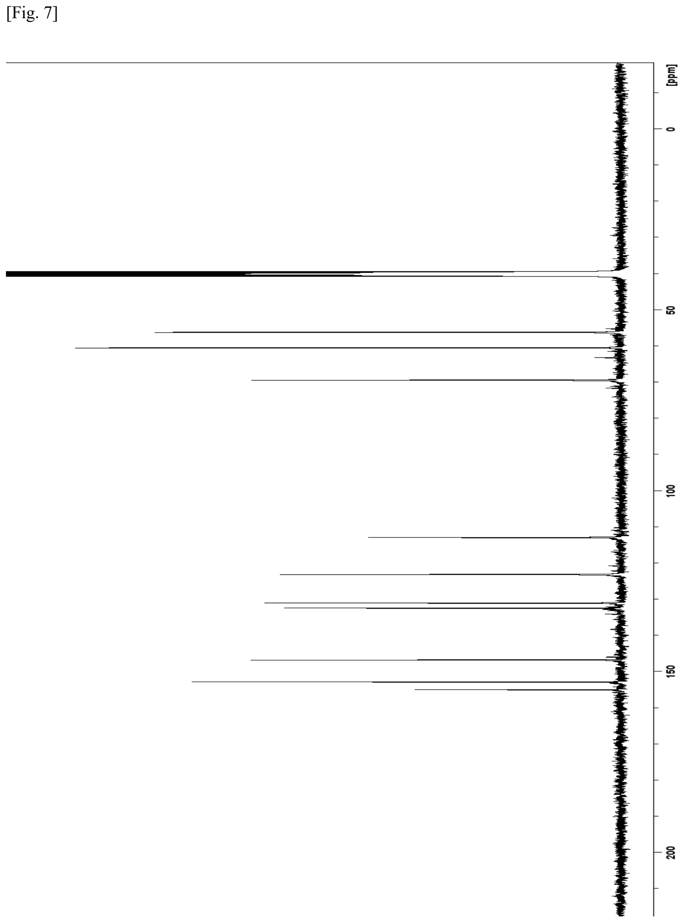

Le produit de synthèse est analysé par ¹H-RMN (**figure 6**), ¹³C-RMN (**figure 7**).

### Exemple 4 : Polymérisation du tétraméthoxy divanillyle diol en présence de carbonate de diéthyle

4g de tétraméthoxy divanillyle (11.98 mmol) ainsi qu'un gros excès de carbonate de diethyle (28.2g ; 239.52 mmol) et de carbonate de potassium (4.96g ; 35.94 mmol) sont laissé à 78°C pendant toute une nuit sous agitation. Par la suite, le mélange d'oligomères, de méthanol, de carbonate de diméthyle et de carbonate de potassium en excès est filtré afin d'éliminer K₂CO₃. Enfin la solution est distillée à 140°C afin de ne récupérer que les oligomères de tétraméthoxy divanillyle diol, majoritairement terminés par des carbonates d'éthyle.

Une fois cette étape préliminaire réalisée, les oligomères de tétraméthoxy divanillyle sont mis en présence de 1 mL d'une solution de 1-ethyl-3-méthylimidazolium acetate (3.1 mmol/L dans du toluène), puis le milieu est inerté sous azote afin d'initier la première phase de transestérification (1h à 180°C, 1h à 190°C, 1h à 200°C, 1h à 210°C, pression atmosphérique). Tout au long de cette étape, le carbonate de diéthyle en excès ainsi que l'éthanol sous-produit sont distillés par une colonne de Vigreux, et récupérés dans un ballon de collecte. Dans un second temps appelé polycondensation, la colonne de Vigreux est retirée et la pression abaissée à 2 mbar pendant durant 1 heure à 220°C. Les montages utilisés lors de la synthèse apparaissent en figure 2.

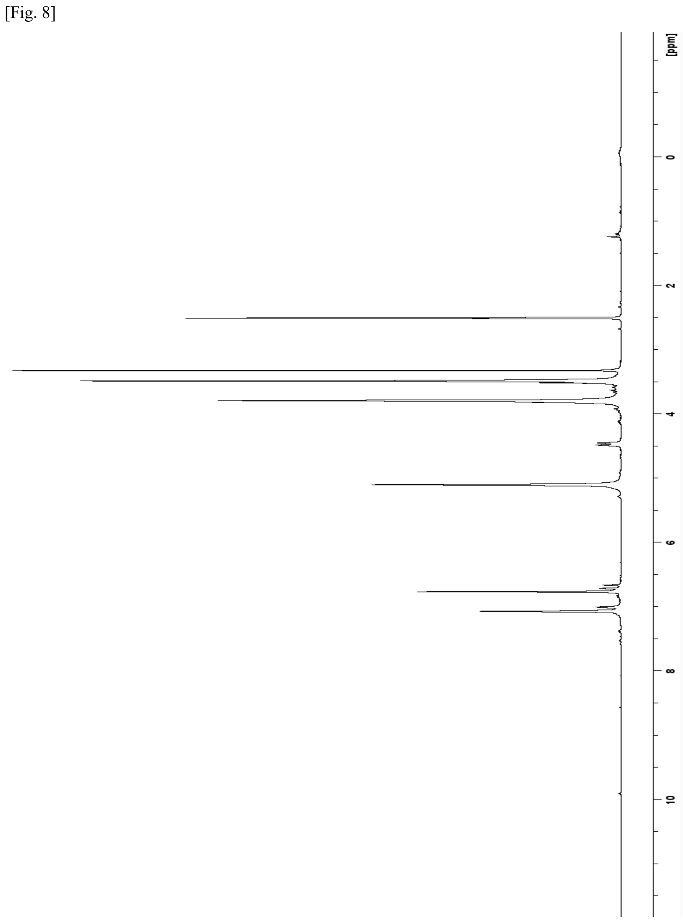

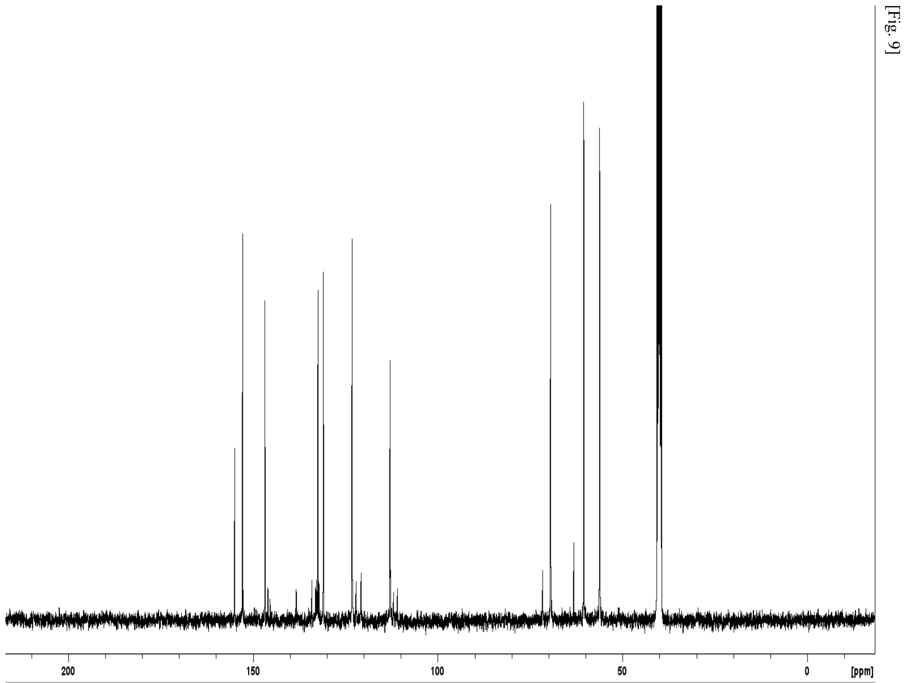

Le produit de synthèse est analysé par ¹H-RMN (**figure 8**), ¹³C-RMN (**figure 9**).

### Exemple 5 : Polymérisation de la divanilline

Il a été réalisé la synthèse de polycarbonates à base de divanilline et de dialkyl/diphényl carbonates. Un trimère carbonate de diméthyle - tétraméthoxy divanillyle diol - carbonate de diméthyle a pu être formé selon la méthode développée dans la demande WO 2012/136942A1. Pour cela, 3g (9.92 mmol) de divanilline sont mis en présence de 4.11g de K₂CO₃ (29.7 mmol) et de 100g (1.11 mmol) de carbonate de diméthyle. L'ensemble est laissé à 60°C pendant 7h, puis l'excès de carbonate de diméthyle est éliminé par filtration, et le mélange de trimère et de carbonate de potassium récupéré sur le filtre est lavé avec de l'eau. L'ensemble est solubilisé avec un minimum de DMSO puis ajouté goutte à goutte dans un volume au moins trois fois supérieur d'eau afin de faire précipiter le trimère carbonate de diméthyle - tétraméthoxy divanillyle diol - carbonate de diméthyle. Ce dernier est alors récupéré par filtration.

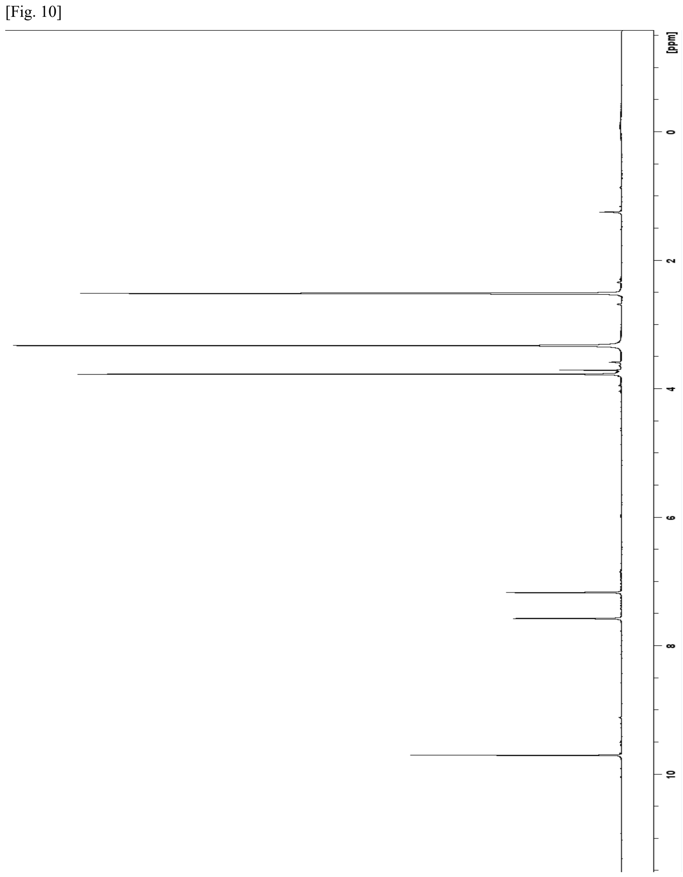

Le produit obtenu est analysé par ¹H-RMN (**figure 10**).

Ce trimère carbonate de diméthyle- tétraméthoxy divanillyle diol- carbonate de diméthyle a ensuite été utilisée lors de synthèses de polycarbonates en voie solvant.

## Revendications

1. Oligomère de polycarbonate comprenant des unités structurales dérivées d'un diol divanilline ou dérivé de divanilline.

2. Oligomère de polycarbonate selon la revendication 1, dans lequel le diol dérivé de divanilline est de formule (I) suivante : 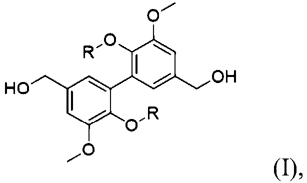 dans laquelle R est choisi parmi les alkyles linéaires et ramifiés en C₁ à C₆, R étant en particulier Me.

3. Oligomère de polycarbonate selon l'une quelconque des revendications précédentes, comprenant en sus une ou deux unités structurales terminales dérivées d'un carbonate organique, en particulier symétrique ou mixte, le carbonate organique étant en particulier de formule suivante : 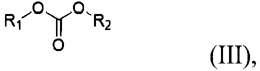 dans laquelle R₁ et R₂ sont indépendamment choisis parmi les alkyles linéaires et ramifiés en C₁ à C₆, en particulier Me ou Et, et les aryles, en particulier Ph, R₁ et R₂ étant plus particulièrement identiques.

4. Oligomère de polycarbonate selon l'une quelconque des revendications précédentes, étant de formule (I₀) suivante : 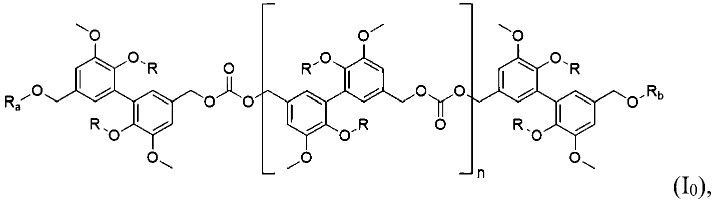 dans laquelle :
n est un entier compris entre 0, 1 ou 2 et 15 ou 20 ;
R est choisi parmi les alkyles linéaires et ramifiés en C₁ à C₆, R étant en particulier Me ;
Rₐ est choisi parmi H, et les groupes COOR_{c}, où R_{c} est choisi parmi les alkyles linéaires et ramifiés en C₁ à C₆, en particulier Me ou Et, et les aryles, en particulier Ph ;
R_{b} est choisi parmi H, et les groupes COOR_{d}, où R_{d} est choisi parmi les alkyles linéaires et ramifiés en C₁ à C₆, en particulier Me ou Et, et les aryles, en particulier Ph.
en particulier de formule (I₁) suivante : 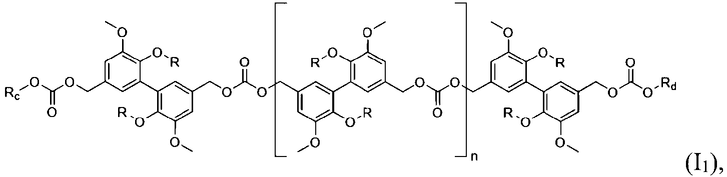 dans laquelle :
n est un entier compris entre 0, 1 ou 2 et 15 ou 20 ;
R_{c} et Rd sont indépendamment choisis parmi les alkyles linéaires et ramifiés en C₁ à C₆, en particulier Me ou Et, et les aryles, en particulier Ph,
ou étant de formule (II₀) suivante : 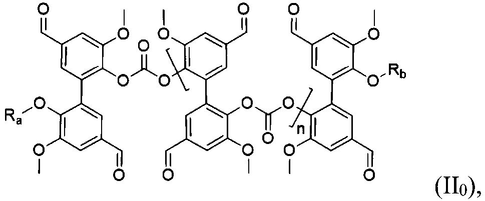 dans laquelle :
n est un entier compris entre 0, 1 ou 2 et 15 ou 20 ;
R est choisi parmi les alkyles linéaires et ramifiés en C₁ à C₆, R étant en particulier Me ;
Rₐ est choisi parmi H, et les groupes COOR_{c}, où R_{c} est choisi parmi les alkyles linéaires et ramifiés en C₁ à C₆, en particulier Me ou Et, et les aryles, en particulier Ph ;
R_{b} est choisi parmi H, et les groupes COOR_{d}, où R_{d} est choisi parmi les alkyles linéaires et ramifiés en C₁ à C₆, en particulier Me ou Et, et les aryles, en particulier Ph.
en particulier de formule (II₁) suivante : 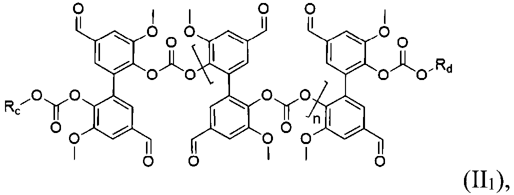 dans laquelle :
n est un entier compris entre 0, 1 ou 2 et 15 ou 20 ;
R_{c} et Rd sont indépendamment choisis parmi les alkyles linéaires et ramifiés en C₁ à C₆, en particulier Me ou Et, et les aryles, en particulier Ph.

5. Oligomère de polycarbonate selon l'une quelconque des revendications précédentes, comprenant en sus au moins une unité structurale dérivée d'un autre diol, notamment aliphatique ou aromatique, et/ou cyclique ou linéaire, par exemple choisi parmi cyclohexanediméthanol (CHDM), éthylène glycol, propylène glycol, et isosorbide.

6. Utilisation d'un diol divanilline ou dérivé de divanilline pour l'obtention d'un oligomère de polycarbonate comprenant des unités structurales dérivées dudit diol.

7. Procédé de préparation d'un oligomère de polycarbonate selon l'une quelconque des revendications 1 à 5, comprenant une étape de polymérisation d'un diol divanilline ou dérivé de divanilline en présence d'un carbonate organique.

8. Procédé selon la revendication 7, dans lequel l'étape de polymérisation se fait en voie fondue, le diol étant en particulier un diol dérivé de divanilline.

9. Procédé selon la revendication 8, dans lequel l'étape de polymérisation se fait :
- en présence d'un catalyseur, notamment choisi parmi les liquides ioniques, notamment un 1-éthyl-3-méthylimidazolium, les bases fortes, notamment KOH et NaOH, les carbonates inorganiques, notamment CsCO₃ et Na₂CO₃, les acides de Lewis, notamment acétate de zinc ou Ti(iOPr)₄, des bases organiques, notamment la 4-diméthylaminopyridine (DMAP) et le 1,8-diazabicyclo[5.4.0]undéc-7-ène DBU), le catalyseur étant par exemple le 1-éthyl-3-méthylimidazolium acétate, et/ou
- sous atmosphère inerte, par exemple sous argon.

10. Utilisation d'un oligomère de polycarbonate selon l'une quelconque des revendications 1 à 5, pour la préparation de polycarbonates, ou lorsque ledit oligomère est terminé par des fins de chaîne OH, en tant que précurseurs pour la synthèse de polyuréthanes.
